# EUROPÄISCHE PATENTSCHRIFT

(11) **EP 4 563 325 B1**
(45) Veröffentlichungstag und Bekanntmachung des Hinweises auf die Patenterteilung: **25.03.2026**
(21) Anmeldenummer: 24209837.4
(22) Anmeldetag: 30.10.2024
(51) Int. Cl.: B29C 49/78, G01N 21/90, B29C 49/06, B29C 49/64, B29K 67/00, B29L 31/00

(54) **PRÜFEINRICHTUNG ZUM PRÜFEN ZUMINDEST EINES PREFORMS, STRECKBLASMASCHINE UND VERFAHREN ZUM PRÜFEN EINES PREFORMS**
TEST DEVICE FOR TESTING AT LEAST ONE PREFORM, STRETCH BLOW MOLDING MACHINE AND METHOD FOR TESTING A PREFORM
DISPOSITIF DE CONTRÔLE POUR CONTRÔLER AU MOINS UNE PRÉFORME, MACHINE D'ÉTIRAGE-SOUFFLAGE ET PROCÉDÉ DE CONTRÔLE D'UNE PRÉFORME

(30) Priorität: 30.11.2023 DE 102023133494
(43) Veröffentlichungstag der Anmeldung: 04.06.2025
(73) Patentinhaber: KHS GmbH, 44143 Dortmund (DE)
(72) Erfinder: Fritsche, Claas, 44143 Dortmund (DE); Lewin, Frank, 44143 Dortmund (DE)

(56) Entgegenhaltungen:
- EP-A1- 3 181 328
- EP-B1- 2 112 502
- US-A1- 2023 120 081

## Beschreibung

Die Erfindung betrifft eine Prüfeinrichtung zum Prüfen eines Preforms, eine Streckblasmaschine und ein Verfahren zum Prüfen eines Preforms.

Preforms auch Vorformlinge genannt sind im Allgemeinen ein vorgeformtes Material, welches im Stand der Technik häufig als Vorprodukte verwendet und in einem finalen Produktionsschritt zu einem Endprodukt verarbeitet werden. Ein Produktionsverfahren, welches Preforms zu Hohlkörpern ausformt, ist das Streckblasverfahren auch Blasverfahren genannt. Mit dem Streckblasverfahren werden insbesondere Kunststoffbehälter, insbesondere Flaschen, aus insbesondere thermoplastischen Kunststoffen hergestellt. In einem ersten Verfahrensschritt wird das Preform, welcher insbesondere eine vorgeformte Kunststoffhülse ist, auf eine Verarbeitungstemperatur von vorzugsweise 90 °C bis 120 °C temperiert. Die Preforms weisen dabei im Allgemeinen einen Funktionsbereich zu ihrer Halterung in einem Vorwärmbereich auf. Bei Preforms, die zur Flaschenherstellung verwendet werden, ist der Funktionsbereich vorzugsweise in einen Stützring eines Gewindehalses integriert. In einem zweiten Prozessschritt wird das Preform in eine Blasform eingelegt. Bei Streckblasmaschinen wird eine Reckstange in das Preform geführt und das Preform in einer Längsrichtung gedehnt. Zusätzlich oder alternativ wird ein Prozessgas in das Preform geleitet, so dass das Preform in einer Quer- und/oder Längsrichtung expandiert, bis die Außenwände des Preforms an den Wandungen der Blasform anliegen. Es sind Blasverfahren bekannt, welche zunächst einen ersten Druck des Prozessgases aufgeben und anschließend einen zweiten Druck des Prozessgases. Schließlich erfolgt eine Entlüftung des ausgeformten Hohlkörpers sowie ein Auswerfen des ausgeformten Hohlkörpers aus der Blasform.

Zur Qualitätssicherung sind im Stand der Technik verschiedene Verfahren bekannt, welche anhand von Prüfkriterien eine Qualität eines Preforms feststellen. Im Stand der Technik werden insbesondere Sensoren zur Qualitätsprüfung das Preforms verwendet. Im Allgemeinen wird ein erster Sensor zur Höhenabfrage einer Stützringhöhe verwendet. Zusätzlich wird zumeist ein zweiter Sensor zur Verifikation des Taumelschlages eingesetzt. Darüber hinaus wird im Stand der Technik ein dritter Sensor zur Aufstecküberwachung des Preforms in einer Preformhalterung verwendet. Des Weiteren wird im Stand der Technik ein vierter Sensor, insbesondere eine Kamera, für eine Seitenwandkontrolle der Seitenwände des Preforms eingesetzt. Schließlich wird im Stand der Technik ein fünfter Sensor, insbesondere eine zweite Kamera, zur Prüfung einer Farbe des Preforms und/oder ein sechster Sensor, insbesondere eine dritte Kamera, zur Prüfung einer Länge des Preforms verwendet. Mit anderen Worten werden im Stand der Technik eine Vielzahl Sensoren eingesetzt, um Prüfkriterien eines Preforms zu ermitteln. Darüber hinaus ist eine Überprüfung der Prüfkriterien während einer Aufheizphase das Preforms im Stand der Technik bekannt.

Die Prüfung der Qualität eines Preforms kann vor der Expansion des Preforms erfolgen. Derart können Preforms, die die Qualitätsanforderungen nicht erfüllen, vor ihrer Expansion aus dem Prozess ausgeschleust werden.

WO 00 2020 177 982 A1 offenbart ein Verfahren zur Produktführung in einer Streckblas- und/oder Abfüllanlage für Flaschen und eine entsprechende Produktionsanlage. Demnach werden Rohling-Parameter von zum Streckblasen bereitgestellten Rohlingen automatisch gemessen und dabei gewonnene Initialdaten abgespeichert. Ferner werden wenigstens Flaschen-Parameter streckgeblasener leerer und/oder anschließend gefüllter Flaschen automatisch gemessen und optional ferner beim Streckblasen und/oder Abfüllen auftretender Maschinenfehlerzustände automatisch festgestellt. Dabei gewonnene Ergebnisdaten werden den Rohlingen individuell zugeordnet und abgespeichert. Ferner wird wenigstens ein im Produktionsbetrieb nachfolgend geltendes Ausleitkriterium zur Entscheidung über ein Ausleiten fehlerhafter Rohlinge oder Flaschen auf der Grundlage einer Datenanalyse der gespeicherten Initialdaten Ergebnisdaten berechnet. Dadurch, dass die Berechnung des Ausleitkriteriums unter Berücksichtigung im Produktionsbetrieb hinzugewonnener Initialdaten und Ergebnisdaten zudem automatisch aktualisiert werden, können die Produktqualität durch Verarbeitung einer zunehmenden größeren Datenmenge im Sinne einer Selbstoptimierung laufend verbessert und die Häufigkeit von Produktionsausfällen reduziert werden.

DE 000010 259 589 B3 offenbart ein Verfahren und eine Vorrichtung zum Herstellen von Hohlkörpern aus Kunststoff durch Steckblasen von erwärmten Vorformlingen, wobei die Vorformlinge vor dem Erwärmen kontrolliert und zumindest ein Teil der fehlerhaften Vorformlinge erwärmt und erst nach dem Erwärmen ausgeschieden werden. Für die Kontrolle der Vorformlinge ist eine vor einem Umlaufbereich des Einlaufsternrads angeordnete optoelektronische Kontrollstation mit einer stationär über der Bewegungsbahn der Vorformlinge angeordneten CCD-Kamera mit einer Optik und einer Beleuchtungseinrichtung offenbart. Die Kamera erzeugt von jedem vorbeilaufenden Vorformling ein Bild der Mündung und des Tragrings. Das Bild wird in einer angeschlossenen elektronischen Auswertungseinrichtung in Echtzeit analysiert und klassifiziert. Bei Fehlern an der Dichtfläche, am Tragring und/oder einer leicht ovalen Mündung wird dabei ein erstes Fehlersignal erzeugt und ein zweites Fehlersignal wird erzeugt, wenn ein Vorformling mit stark ovaler oder geschlossener oder nur teilweise offener Mündung inspiziert wird, unabhängig davon, ob die Dichtfläche und der Tragring beschädigt sind oder nicht. Weitere Gattungsgemäße Vorrichtungen und Verfahren sind in den Patentschriften EP3181328A1, EP2112502B1 und US2023/120081A1 beschrieben.

Der bekannte Stand der Technik weist den Nachteil auf, dass eine Vielzahl von Sensoren und Kameras zur Prüfung des Preforms verwendet werden. Der damit einhergehende Prüfaufbau ist komplex. Zur Sicherung hoher Produktionsstandards ist eine hohe Qualität der Prüfungen erforderlich. Folglich besteht ein Bedarf einer verbesserten Prüfeinrichtung zur Verifikation einer Vielzahl geometriebedingter sowie materialbedingter Prüfkriterien von Preforms, welche insbesondere für Ausformungen mittels Streckblasverfahren vorgesehen sind.

Aufgabe der Erfindung ist es, den Stand der Technik zu verbessern.

Gelöst wird die Aufgabe durch eine Prüfeinrichtung zum Prüfen zumindest eines Preforms, mit einem optischen Sensor, einer Auswerteeinheit mit einem Dateneingang und einem Datenausgang, wobei die Auswerteeinheit über den Dateneingang sensordatenaustauschend mit dem optischen Sensor verbunden ist, wobei der Prüfeinrichtung eine Haltevorrichtung zugeordnet ist, welche zum Halten des Preforms ausgestaltet ist und das Preform zu einem ersten Zeitpunkt in einer ersten vordefinierten Orientierung des Preforms an eine erste Position führt und das Preform zu einem zweiten Zeitpunkt in einer zweiten vordefinierten Orientierung des Preforms an eine zweite Position führt, wobei die Prüfeinrichtung eingerichtet ist mittels des optischen Sensors zum ersten Zeitpunkt erste Sensordaten des Preforms zu ermitteln und über den Dateneingang an die Auswerteeinheit zu senden und mittels des optischen Sensors zum zweiten Zeitpunkt zweite Sensordaten des Preforms zu ermitteln und über den Dateneingang an die Auswerteeinheit zu senden, wobei die Auswerteeinheit eingerichtet ist anhand der ersten Sensordaten die Einhaltung eines ersten Prüfkriteriums und anhand der zweiten Sensordaten die Einhaltung eines zweiten Prüfkriteriums zu ermitteln.

Unter Verwendung genau eines optischen Sensors können somit Sensordaten ermittelt werden, welche zur Prüfung des ersten Prüfkriteriums als auch des zweiten Prüfkriteriums dienen.

Vorteilhafter Weise wird der Wartungsaufwand der Prüfeinrichtung durch die Reduktion der Sensoren auf insbesondere einen optischen Sensor reduziert. Einhergehend mit der Reduktion der Sensoren wird die Störungsanfälligkeit der Prüfeinrichtung und/oder des Prüfverfahrens verbessert. Die Verwendung eines insbesondere einzigen optischen Sensors reduziert vorteilhafter Weise die Komplexität der Prüfeinrichtung und/oder die Komplexität der Anordnung der Elemente der Prüfeinrichtung.

Durch die erfindungsgemäße Anordnung des zu prüfenden Preforms in einer ersten Orientierung und einer zweiten Orientierung wird vorteilhafter Weise eine im Wesentlichen den gesamten Umfang des Preforms berücksichtigende Prüfung realisiert. Somit oder ergänzend unter Verwendung geeigneter Prüfalgorithmen wird eine hohe Qualität der Prüfergebnisse sichergestellt. Schließlich wird durch die erfindungsgemäße Prüfeinrichtung vorteilhafter Weise die Prüfung einer Vielzahl geometriebedingter, materialbedingter und/oder weiterer Prüfkriterien umgesetzt.

Ein wesentlicher Gedanke beruht insbesondere darauf, dass eine komplexe Preformprüfung anhand mehrerer Prüfkriterien insbesondere mittels im Wesentlichen eines einzigen optischen Sensor durchgeführt wird.

### Folgendes Begriffliche sei erläutert:

Eine "Prüfeinrichtung" ist insbesondere eine Anordnung, welche zum Verifizieren eines vordefinierten Kriteriums eingerichtet ist. Die Prüfeinrichtung kann einen, insbesondere manuell oder automatisiert ermittelten, Messwert des Kriteriums an einem definierten Prüfgegenstand, hier entsprechend ein Preform, ermitteln. Zusätzlich oder alternativ ist die Prüfeinrichtung dazu eingerichtet, den Messwert zu einem für das Kriterium vordefinierten Qualitätsbereich zuordnen. Der vordefinierte Qualitätsbereich kann ein Konfidenzintervall aufweisen. Prüfgegenstände, deren Messwerte insbesondere innerhalb des Konfidenzintervalls liegen, können in einer Datenbank als "geprüft" hinterlegt werden.

Unter einem "Preform" wird insbesondere ein vorgeformter Hohlkörper verstanden, aus welchem insbesondere unter Verwendung einer Blasmaschine ein Behälter herstellbar ist. Der Behälter kann eine Flasche und/oder ein Trinkgefäß sein. Die Umwandlung des Preforms zu dem Behälter wird insbesondere durch eine Volumenvergrößerung des Innenraums des Preforms unter gleichzeitiger Abnahme der Wandstärke des Preforms erreicht. Mit anderen Worten ist der Behälter ein ausgeformtes Preform. Ein Preform wird auch Vorformling genannt. Das Preform kann Kunststoff, insbesondere thermoplastischen Kunststoff, aufweisen. Der thermoplastische Kunststoff kann beispielsweise PET, PVC oder auch PP sein.

In einer Ausführungsform weist das Preform einen Fixierbereich und einen Ausformkörper auf. Der Fixierbereich wird insbesondere nicht durch die Expansion des Ausformkörpers beeinflusst. Das Preform kann weiter einen Stützring zur Anordnung des Preforms, insbesondere zur Anordnung in einer Haltevorrichtung, aufweisen. Der Stützring kann die Fixierung und/oder ein Teilelement der Fixierung sein. Zusätzlich oder alternativ weist das Preform einen Hals mit einem Gewinde auf. Der Stützring ist insbesondere an dem Hals angeordnet. Schließlich kann der Ausformkörper dazu eingerichtet sein, insbesondere bei einer vordefinierten Prozesstemperatur, mittels eines, unter Verwendung eines Prozessgases hergestellten, Innendrucks in Richtung einer vordefinierten Blasformkontur expandiert zu werden, bis die Außenwände des Preforms insbesondere vollflächig an der Blasformkontur anliegen. Das Prozessgas kann beispielsweise Druckluft sein. Zusätzlich oder ergänzend ist die Expansion unter Verwendung eines mechanischen Elements, insbesondere einer Reckstange, realisiert. Durch den Fixierbereich an dem Preform wird vorteilhafter Weise eine sichere Anordnung des Preforms an einem Maschinenelement vor dem Ausformen, während des Ausformens und nach dem Ausformen des Preforms realisiert.

Das Preform weist insbesondere eine Längserstreckung und eine Quererstreckung auf und ist im Wesentlichen rotationssymmetrisch bezüglich seiner Höhenachse, welche mittig im Preform liegt und entlang seiner Längserstreckung orientiert ist, ausgestaltet. Das Preform weist entlang seiner Höhenachse insbesondere eine Höhe von 2 cm bis 20 cm, insbesondere 4 cm bis 7 cm, auf. Eine Wandstärke des Preforms beträgt beispielsweise 0,1 mm bis 10 mm, insbesondere 0,5 mm bis 5 mm. Die Wandstärke des Behälters beträgt insbesondere 0,2 mm bis 10 mm. Der Behälter kann ein Volumen von 0,1 l bis 20 l aufweisen.

Die erste vordefinierte Orientierung des Preforms kann durch einen ersten Winkelgrad des Preforms bezüglich der Höhenachse des Preforms und die zweite vordefinierte Orientierung durch einen zweiten Winkelgrad bezüglich der Höhenachse des Preforms gekennzeichnet sein. Zusätzlich oder alternativ kann eine dritte vordefinierte Orientierung durch einen dritten Winkelgrad bezüglich der Höhenachse des Preforms gekennzeichnet sein. Weitere Orientierungen mit jeweiligen Winkelgraden des Preforms um die Höhenachse können definiert sein. Als Winkelgrad wird insbesondere ein Rotationswinkel um die Höhenachse des Preforms verstanden. Der Winkelgrad gibt insbesondere eine Drehung um die Höhenachse in Bezug auf eine Nullstellung einer Rotation um die Höhenachse des Preforms an.

Der erste Winkelgrad kann dem zweiten Winkelgrad und/oder einem weiteren Winkelgrad entsprechen. Mit anderen Worten offenbart sich einem ortsfesten optischen Sensor insbesondere eine erste Projektionsfläche des an der ersten Position befindlichen Preforms mit der ersten Orientierung und eine zweite Projektionsfläche des an der zweiten Position befindlichen Preforms mit der zweiten Orientierung. Entsprechendes gilt für den an der dritten oder einer weiteren Position befindlichen Preform. Die erste Orientierung kann der zweiten Orientierung und/oder einer weiteren Orientierung entsprechen. Das Preform weist mit anderen Worten insbesondere eine erste vordefinierte Orientierung an der ersten Position und eine zweite vordefinierte Orientierung an der zweiten Position auf, so dass dem optischen Sensor während des Prüfprozesses vorteilhafter Weise insbesondere zwei Projektionsflächen des Preforms offenbart sind.

Der zweite Winkelgrad ist in einer Ausführungsform in einer ersten Rotationsrichtung um 30° bis 90°, insbesondere 40° bis 80°, bevorzugt 60° kleiner, als der erste Winkelgrad. Der dritte Winkelgrad ist insbesondere in der ersten Rotationsrichtung um 30° bis 90°, insbesondere 40° bis 80°, insbesondere 60°, kleiner, als der zweite Winkelgrad. Mittels einer jeweiligen Winkeländerung des ersten Winkelgrades zum zweiten Winkelgrad und des zweiten Winkelgrades zum dritten Winkelgrad um 60° wird vorteilhafter Weise im Wesentlichen eine Offenbarung der gesamten Außenmantelfläche des Preforms gegenüber dem optischen Sensor erreicht. Derart werden bei einer sensortechnischen Erfassung aller drei Orientierungen des Preforms vorteilhafter Weise jeweilige Projektionen sensortechnisch aufgenommen, welche in ihrer Gesamtheit eine im Wesentlichen vollständige Erfassung über die Gesamtmantelfläche des Preforms realisieren.

Mittels einer Erhöhung der Anzahl der jeweils bezüglich des Winkelgrades unterschiedlichen Orientierungen des Preforms, insbesondere unter Beachtung der Erreichung einer kumulierten Aufnahme der Gesamtmantelfläche des Preforms, kann vorteilhafter Weise eine Überlappung der Projektionsflächen realisiert werden. Eine Überlappung der Projektionsflächen kann auswertetechnische Vorteile bieten.

Die erste Position und die zweite Position liegen insbesondere an einem jeweiligen vordefinierten Ortspunkt der Prüfeinrichtung. Zusätzlich oder alternativ liegen die erste und die zweite Position unmittelbar in einem Erfassungsbereich des optischen Sensors. Es können eine dritte Position und weitere Positionen definiert sein, welche Merkmale der ersten Position und/oder der zweiten Position aufweisen. Alternativ oder ergänzend liegt eine Position des Preforms außerhalb des Erfassungsbereiches des optischen Sensors der Prüfeinrichtung. Mittels Anordnung eines Spiegels kann der Erfassungsbereich des optischen Sensors derart erweitert werden, dass eine außerhalb des Erfassungsbereiches des optischen Sensors liegende Position derart mittelbar in dem Erfassungsbereich des optischen Sensors der Prüfeinrichtung vorliegt. Durch die Anordnung eines Spiegels wird der Erfassungsbereich des optischen Sensors vorteilhafter Weise erweitert und/oder Sichtbehinderungen, beispielsweise durch Maschinenelemente, können aufgehoben werden. Schließlich können durch die Anordnung eines Spiegels vorteilhaft zeitgleich zwei Projektionsflächen des Preforms mit im Wesentlichen einem einzigen Sensor aufgenommen werden.

Ist die erste Position eine von der zweiten Position unterschiedliche Position, liegt zwischen den beiden Positionen im Allgemeinen ein Transportweg des zu prüfenden Preform vor. In diesem Fall liegt der zweite Zeitpunkt zwingend zeitlich nach dem ersten Zeitpunkt.

Die erste Position kann der zweiten Position entsprechen. In diesem Fall kann eine erste Orientierung des Preforms zu einem ersten Zeitpunkt an der gemeinsamen ersten und zweiten Position und eine zweite Orientierung des Preforms zu einem zweiten Zeitpunkt an der gemeinsamen ersten und zweiten Position vorliegen. Entspricht auch die erste Orientierung der zweiten Orientierung, kann der zweite Zeitpunkt dem ersten Zeitpunkt entsprechen. Das Preform kann zum ersten Zeitpunkt und/oder zum zweiten Zeitpunkt und/oder zum dritten Zeitpunkt in Mitten einer Bewegung sein. Mit anderen Worten erfolgt die Aufnahme der Sensordaten zu zumindest einem der genannten Zeitpunkte während eines Transports des Preforms. Derart wird der Prozess während der Datenaufnahme vorteilhafter Weise nicht unterbrochen.

Alternativ oder ergänzend kann das Preform zu dem ersten Zeitpunkt, zum zweiten Zeitpunkt und/oder zum dritten Zeitpunkt zumindest temporär lagernd sein. Mit anderen Worten kann eine Bewegung des Preforms zu zumindest einem der Aufnahmezeitpunkte unterbrochen sein. Vorteilhafter Weise können während eines temporären Ruhens des Preforms schärfere Aufnahmen gemacht werden.

Das Preform kann zu dem ersten Zeitpunkt, dem zweiten Zeitpunkt und/oder zu dem dritten Zeitpunkt noch nicht in einen ersten Heizbereich einer Streckblasmaschine eingeführt sein, in dem ersten Heizbereich vorliegen, zwischen dem ersten Heizbereich und einem zweiten Heizbereich vorliegen, in dem zweiten Heizbereich vorliegen und/oder aus dem zweiten Heizbereich ausgeführt sein. Insbesondere vor dem ersten Heizbereich und nach dem zweiten Heizbereich kann das Preform oder können eine Vielzahl Preforms in einem Speicher vorliegen. Selbstverständlich ist die Anzahl von Heizbereichen maschinenabhängig und entsprechend reduzierbar und erweiterbar. Mit anderen Worten kann zumindest einer der Zeitpunkte, zu denen der optische Sensor Sensordaten ermittelt zeitgleich zu einer Heizphase des Blasprozesses liegen. Zusätzlich oder alternativ kann zumindest einer der Zeitpunkte vor einer Heizphase des Blasprozesses liegen. Schließlich kann zumindest einer der Zeitpunkte nach einer Heizphase des Blasprozesses liegen. Vorteilhafter Weise können die Zeitpunkte so definiert sein, dass Sensordaten von durch das Heizen möglicherweise beeinflussten Prüfkriterien zu einem optimalen Zeitpunkt ermittelt werden.

Unter einer "Heizphase" wird insbesondere eine Phase eines Streckblasprozesses verstanden, in welchem das Preform auf eine vordefinierte Prozesstemperatur vorgewärmt wird. Die vordefinierte Prozesstemperatur beträgt insbesondere 90°C bis 160°C.

Unter einem "optischen Sensor" wird insbesondere ein Sensor verstanden, welcher optische Daten ermittelt. Optische Daten werden auch als Bilddaten bezeichnet. Der optische Sensor ist insbesondere eingerichtet, optische Daten eines Prüfelements aufzunehmen. Ein optischer Sensor ist beispielsweise eine Kamera, insbesondere CCD-Kamera. Der optische Sensor weist zusätzlich oder alternativ ein Steuerungselement auf. Das Steuerelement ist beispielsweise ausgestaltet, ein Auslösen der Datenaufnahme des optischen Sensors zu veranlassen, einen Zoom der Kamera einzustellen und/oder ein Fokus der Kamera zu steuern. Ein Auslösen der Datenaufnahme kann mit einem Speichern einer Bilddatei gekoppelt sein.

Der Vorgang des Speicherns einer Bilddatei als erste Sensordaten erfolgt insbesondere zu einem Auslösezeitpunkt. Der Auslösezeitpunkt kann programmtechnisch hinterlegt sein. Zusätzlich oder alternativ kann der Auslösezeitpunkt steuerungstechnisch mit einer das Preform an die erste Position und/oder an die zweite Position transportierenden Vorrichtung, beispielweise mit der Haltevorrichtung und/oder mit der Führungseinrichtung des Preforms und/oder mit der Blasmaschine, gekoppelt sein. Eine steuerungstechnische Kopplung des Auslösezeitpunktes mit der das Preform transportierenden Vorrichtung realisiert vorteilhafter Weise eine einfache Steuerung der Datenaufnahme des optischen Sensors.

Unter einer "Haltevorrichtung" wird insbesondere ein Element verstanden, welches dazu eingerichtet ist, ein Preform in einer insbesondere vordefinierten Orientierung zu halten. Unter einer vordefinierten Orientierung wird insbesondere ein Rotationswinkel um die Höhenachse des Preforms verstanden, ausgehend von einer definierten Ausgangslage. Die Höhenachse erstreckt sich entlang der Längserstreckung des Preforms und verläuft im Wesentlichen mittig im Preform. Die Höhenachse ist im Wesentlichen vertikal orientiert. Zusätzlich oder alternativ kann die Höhenachse gekippt sein. Vorteilhafter Weise offenbart sich dem optischen Sensor bei einer Orientierung des Preforms mit einer gekippt orientierten Höhenachse eine Unterseite des Preforms.

Die Haltevorrichtung kann temporär ein Preform aufnehmen. Die Haltevorrichtung kann zum Aufnehmen des Preforms beispielsweise eine Zange, eine Klemme, einen Dorn und/oder einen Haltering aufweisen. Die Zange und/oder die Klemme kann oder können eine Aufnahmeposition und eine Transportposition aufweisen. In der Aufnahmeposition sind die Schenkel der Zange und/oder der Klemme insbesondere ausgestaltet, um ein Einlegen eines Preforms zulassen. In der Transportposition sind die Schenkel der Zange und/oder der Klemme insbesondere eingerichtet, ein Herausrutschen und/oder Herausfallen des Preforms im Wesentlichen zu verhindern. Die Aufnahmeposition und die Transportposition kann sich im Wesentlichen bezüglich einer Schenkelstellung unterscheiden. Vorteilhafter Weise kann unter Verwendung einer Klemme und/oder Zange eine hohe Raumgängigkeit während eines Transports des Preforms erreicht werden.

Ein Dorn kann zur Halterung eines Preforms an einer Öffnung des Preforms ausgestaltet sein. Das Preform wird mit anderen Worten im Wesentlichen senkrecht, mit dem zukünftigen Behälterboden im Wesentlichen himmelwärts gerichtet, auf den Dorn aufgebracht. Eine konische Form des Dorns realisiert vorteilhafter Weise eine einfache und zuverlässige Zentrierung des Preforms unter Ausnutzung der Schwerkraft. Der Dorn kann zusätzlich ein Sicherungselement aufweisen, welches das Preform in einer Transportposition auf dem Dorn sichert.

Ein Haltering kann zur Aufnahme eines Preforms an einem umlaufenden Stützring des Preforms eingerichtet sein. Das Preform wird mit anderen Worten insbesondere an der Unterseite des Stützringes gehalten. Der Durchmesser des Halteringes ist insbesondere größer als der Außendurchmesser des Preforms und kleiner als der Durchmesser des Stützringes. Zum Einlegen des Preforms in einen Haltering kann dieses von oben in den Haltering eingeführt werden, insofern der Durchmesser des Preforms kleiner als der Durchmesser des Halteringes ist. Zusätzlich oder alternativ ist der Haltering zweigeteilt und/oder öffenbar ausgeführt. In einer Aufnahmeposition kann durch Öffnen des Halterings ein im Wesentlichen größerer Innendurchmesser des Halterings realisierbar sein, in welchen das Preform in den Haltering einführbar ist. Vorteilhafter Weise kann unter Verwendung eines einteiligen Halterings auf eine weitere Sicherung des Preforms verzichtet werden.

Das Öffnen eines zweiteiligen Halterings, einer Klemme und/oder einer Zange kann automatisch erfolgen. Das automatische Öffnen kann durch entsprechende Aktuatoren realisiert sein, welche von einem Maschinensteuerelement angesteuert werden.

Die Haltevorrichtung kann Metall und/oder Kunststoff aufweisen.

Eine Anordnung des Preforms in dem Erfassungsbereich des optischen Sensors wird vorteilhafter Weise durch eine Änderung der Höhe des gehaltenen Preforms mittels der Haltevorrichtung realisiert. Alternativ oder ergänzend realisiert die Haltevorrichtung mittels einer Höheneinstellung die Einhaltung eines Mindestabstands zwischen dem Preform und der Prüfeinrichtung und/oder Elementen der Prüfeinrichtung.

Die Höhe des gehaltenen Preforms kann entlang eines Transportweges unterschiedlich sein. Die Haltevorrichtung ist beispielsweise mittels Spindel und/oder Hubzylinder dazu eingerichtet, das gehaltene Preform in einer ersten Höhe und in einer zu der ersten Höhe unterschiedlichen zweiten Höhe zu halten.

Eine Haltevorrichtung, welche einen durch die Prüfeinrichtung zu prüfenden Preform hält, ist der Prüfeinrichtung zugeordnet. Eine Zuordnung stellt mit anderen Worten einen eindeutigen Bezug zwischen einer definierten Haltevorrichtung und der Prüfeinrichtung her. Die Haltevorrichtung kann die Prüfeinrichtung oder die Prüfeinrichtung die Haltevorrichtung aufweisen. Eine Haltevorrichtung ist zu einem definierten Zeitpunkt insbesondere genau einer Prüfeinrichtung zugeordnet. Eine Haltevorrichtung kann zusätzlich oder alternativ mehreren Prüfeinrichtungen zuordenbar sein.

Zusätzlich oder alternativ ist ein eindeutiger Bezug einer Haltevorrichtung zu einem von der Haltevorrichtung gehaltenten Perform hergestellt. Der Bezug des definierten Preforms zu der definierten Haltevorrichtung und/oder der Bezug der definierten Haltvorrichtung zu der Prüfeinrichtung kann beispielsweise speichertechnisch hinterlegt sein. Um eine automatische Zuordnung zu realisieren, kann zumindest eine Haltevorrichtung einer Vielzahl Haltevorrichtungen ein eindeutiges Identifikationsmerkmal aufweisen.

Die Haltevorrichtung, insbesondere ein Steuerelement der Haltevorrichtung, wie u.a. ein Aktuator der Haltevorrichtung, kann steuerungstechnisch mit der Prüfeinrichtung, insbesondere mit einer Steuerungseinrichtung der Prüfeinrichtung, verbunden sein. Die Steuerungseinrichtung der Prüfeinrichtung kann mit anderen Worten dazu eingerichtet sein, die Haltevorrichtung oder ein Element der Haltevorrichtung anzusteuern. Vorteilhafter Weise ist die Komplexität der Maschinensteuerung durch ein Ansteuern der Haltevorrichtung mittels der Prüfeinrichtung reduziert.

Die Haltevorrichtung ist mit der Prüfeinrichtung insbesondere mittelbar oder unmittelbar verbunden. Zusätzlich oder alternativ kann die Haltevorrichtung keine Berührung und/oder Verbindung zu der Prüfeinrichtung aufweisen.

Die unmittelbare Verbindung der Haltevorrichtung mit der Prüfeinrichtung kann als feste Verbindung der Haltevorrichtung mit einer Grundplatte der Prüfeinrichtung ausgestaltet sein.

Die mittelbare Verbindung zwischen der Haltevorrichtung und der Prüfeinrichtung kann mittels einer Kulisse realisiert sein, an welcher die Haltevorrichtung temporär und/oder fest angeordnet ist. Die Kulisse ist insbesondere als ein Element einer Streckblasmaschine und/oder der Prüfeinrichtung ausgeführt. Zusätzlich oder alternativ kann die mittelbare Verbindung zwischen der Haltevorrichtung und der Prüfeinrichtung mittels einer Führungseinrichtung ausgeführt sein.

Eine zu der Prüfeinrichtung berührungslos ausgestaltete Haltevorrichtung ist beispielsweise unter Verwendung eines Roboters und/oder Handhabungsautomaten realisierbar.

Unter einer "Führungseinrichtung" wird insbesondere ein Element verstanden, welches eine bewegliche Verbindung der Haltevorrichtung gegenüber der Prüfeinrichtung realisiert, wobei die Bewegung insbesondere eine durch die Führungseinrichtung vordefinierte Relativbewegungen ist. Die Führungseinrichtung kann eine Schiene, Gewindestange und/oder Kulisse sein, an welcher die Haltevorrichtung beispielsweise mittels eines Verbindungselements, z.B. Schraubverbindung, oder mittels eines fügetechnischen Produktionsverfahrens, z.B. Schweißen, angeordnet ist.

Die Blasmaschine und/oder Streckblasmaschine und/oder die Prüfeinrichtung und/oder die Haltevorrichtung kann die Führungseinrichtung umfassen.

Die Führungseinrichtung ist insbesondere dazu eingerichtet eine Haltevorrichtung und/oder zeitgleich mehrere Haltevorrichtungen zu halten und/oder entlang eines vordefinierten Transportweges zu führen. Der vordefinierte Transportweg umfasst insbesondere die erste Position eines zu prüfenden Preforms und/oder die zweite Position eines zu prüfenden Preforms und/oder eine Vielzahl weiterer vordefinierter Positionen eines zu prüfenden Preforms. Zusätzlich oder alternativ ist die Führungseinrichtung dazu eingerichtet, die Haltevorrichtung oder zeitgleich mehrere Haltevorrichtungen um eine jeweilige Mittelachse der Haltevorrichtungen und/oder um eine parallel zur jeweiligen Mittelachse der Haltevorrichtungen orientierte Achse und/oder um eine zur jeweiligen Mittelachse der Haltevorrichtungen geneigten Drehachse zu drehen. Die Führungseinrichtung kann die Drehvorrichtung sein und/oder die Drehvorrichtung umfassen.

Die Führungseinrichtung kann als ein Rundlauf, wird auch Karussell genannt, ausgeführt sein. Der Rundlauf kann dem Heizbereich einer Blasmaschine und/oder einem Element des Heizbereichs entsprechen.

**In** einer Ausführungsform ist die Haltevorrichtung an einer Drehvorrichtung angeordnet. Die Drehvorrichtung ist insbesondere dazu eingerichtet, die Haltevorrichtung und damit einhergehend ein in der Haltevorrichtung angeordnetes Preform, zu drehen. Die Drehung kann kontinuierlich und/oder diskontinuierlich sein. Eine diskontinuierliche Drehung erfolgt beispielsweise für eine vordefinierte Dauer und/oder bis zum Erreichen eines vordefinierten Rotationswinkels der Haltevorrichtung und/oder des gehaltenen Preforms.

Die Drehachse, um welche die Drehvorrichtung dreht, entspricht im Wesentlichen der Höhenachse eines gehaltenen Preforms und/oder ist parallel zur Höhenachse des gehaltenen Preforms orientiert. Die Drehachse kann zusätzlich oder alternativ zu der Höhenachse des Preforms geneigt sein.

Die Drehung mittels der Drehvorrichtung kann aktiv im Ansprechen auf einen Steuerbefehl erfolgen. Zur Realisierung einer aktiven Drehung der Haltevorrichtung kann die Drehvorrichtung Stellmotoren aufweisen. Die aktive Drehung kann zusätzlich oder alternativ mittels magnetischer Dreheinrichtungen realisiert sein. Eine aktive Drehung der Haltevorrichtung und damit des in der Haltevorrichtung angeordneten Preforms ermöglicht vorteilhafter Weise eine genaue Einstellung der Orientierung des Preforms zu einem vordefinierten Zeitpunkt.

Zusätzlich oder alternativ erfolgt die Drehung passiv. Zur Realisierung einer passiven Drehung kann die Drehvorrichtung beispielsweise Ketten mit Ritzeln, Riemen mit Riemenscheiben und/oder eine Zahnscheibe mit Kulisse aufweisen. Eine passive Drehvorrichtung nutzt vorteilhafter Weise Elemente der Streckblasmaschine und/oder der Prüfeinrichtung. Da die Bewegung der Maschinenelemente bekannt ist, kann hieraus die jeweilige Orientierung der Haltevorrichtung und/oder des jeweiligen Preforms abgeleitet werden.

Schließlich kann die Drehvorrichtung auch zur sowohl aktiven als auch passiven Drehung der Haltevorrichtung eingerichtet sein. Eine kombinierte Umsetzung einer aktiven und passiven Drehung mittels der Drehvorrichtung ermöglicht vorteilhafter Weise eine wenig komplexe Umsetzung der Orientierung der Preforms in einem Normalbetrieb und eine zusätzliche Positionierung eines in einer Haltevorrichtung angeordneten Preforms in einem Nachprüfbetrieb, um insbesondere zusätzliche Sensoraufnahmen oder erneute Sensoraufnahmen zu machen, welche insbesondere zur weiteren Validierung von Prüfkriterien herangezogen werden können.

In einer Ausführungsform kann die Haltevorrichtung die Drehvorrichtung umfassen. Vorteilhafter Weise ist somit der Wartungsaufwand reduziert.

Unter einer "Auswerteeinheit" wird eine Vorrichtung zur insbesondere programmbasierten Auswertung von Sensordaten, beispielsweise optischen Sensordaten, verstanden. Die programmbasierte Auswertung kann mittels vordefinierter Algorithmen erfolgen. Die Auswerteeinheit weist insbesondere einen Dateneingang und einen Datenausgang auf. Über den Dateneingang und/oder den Datenausgang ist die Auswerteeinheit insbesondere mit weiteren Elementen, z.B. Sensoren, Anzeige, Speicher usw., sensordatenaustauschend verbunden. Die Auswerteeinheit ist über den Dateneingang insbesondere mit dem optischen Sensor der Prüfeinrichtung verbunden und/oder erhält über den Dateneingang Sensordaten des optischen Sensors. Alternativ oder ergänzend ist die Auswerteeinheit dazu eingerichtet, die Aufnahme der ersten Sensordaten und/oder der zweiten Sensordaten mittels des optischen Sensors zu veranlassen. Vorteilhafter Weise kann die Auswerteeinheit derart auch eine Nachprüfung veranlassen, insofern erforderlich.

Die Auswerteeinheit ist dazu eingerichtet empfangene Sensordaten eines Preforms anhand zumindest eines Prüfkriteriums auszuwerten. Zusätzlich oder alternativ ist die Auswerteeinheit eingerichtet, zeitgleich Sensordaten zu mehreren Preforms zu empfangen und/oder auszuwerten. Schließlich kann die Auswerteeinheit eingerichtet sein, empfangene Sensordaten anhand einer Vielzahl Prüfkriterien auszuwerten, insbesondere zeitgleich anhand einer Vielzahl Prüfkriterien auszuwerten. Zusätzlich oder alternativ hinterlegt die Auswerteeinheit das Ergebnis oder die Ergebnisse der Auswertung. Schließlich kann die Auswerteeinheit dazu eingerichtet sein Bildsegmente einer vom optischen Sensor aufgenommenen Bilddatei dahingehend zu verarbeiten, dass Einzelbilder zu jeweiligen Preforms vorliegen und/oder für die Prüfung relevante Bildsegmente auszuwählen.

Die Auswerteeinheit ist mittels des Datenausgangs insbesondere mit einer Steuerungseinrichtung der Prüfvorrichtung und/oder der Blasmaschine verbunden. Vorteilhafter Weise übergibt die Auswerteeinheit signalbasiert das Prüfergebnis zu einem Preform und fehlerhafte Preforms werden auf Basis des Signals vor der Expansion und/oder nach der Expansion ausgeschleust und/oder nochmalig geprüft. Zusätzlich oder alternativ kann die Auswerteeinheit über den Datenausgang mit einem Speicher verbunden sein oder einen Speicher umfassen und dazu eingerichtet sein, Prüfergebnisse speichertechnisch zu hinterlegen.

Das "erste Prüfkriterium" und/oder das "zweite Prüfkriterium" oder ein weiteres Prüfkriterium ist insbesondere eine Eigenschaft des Preforms, welche einen Einfluss, auf eine Qualität des Behälters hat. Ein Prüfkriterium kann geometriebasiert sein. Zusätzlich oder alternativ kann ein Prüfkriterium materialbasiert sein. Schließlich kann ein Prüfkriterium eine Qualität betreffen.

Das Prüfkriterium kann beispielsweise eine "Stützringhöhe", ein "Taumelschlag", eine "Farbe" des Preforms, eine "Länge" des Preforms und/oder eine "Beschaffenheit einer Seitenwand" des Preforms sein.

Eine "Stützringhöhe" ist insbesondere ein Abstand eines Stützrings des Preforms von einem ersten Ende und/oder einem zweiten Ende des Preforms.

Der "Taumelschlag" ist insbesondere eine Rotationssymmetrie eines Teilbereiches des Preforms, insbesondere des Expansionsbereiches des Preforms.

Eine "Farbe" eines Preforms kann mittels eines Farbwerts und/oder eines Grauwertes und/oder eines Transparenzgrads definiert sein.

Eine "Länge" des Preforms beträgt vorzugsweise 2 cm bis 20 cm.

Eine "Beschaffenheit einer Seitenwand" des Preforms ist beispielsweise durch eine glatte Oberfläche charakterisiert. Eine glatte Oberfläche weist im Wesentlichen keine Riffelungen, Erhebungen, Einkerbungen und/oder Kratzer auf.

Zur Prüfung des ersten Prüfkriteriums und/oder des zweiten Prüfkriteriums kann ein Konfidenzintervall vordefiniert sein. Ein Konfidenzintervall eröffnet vorteilhafter Weise einen Messbereich, in welchem ein Prüfkriterium als "bestanden" gewertet wird. Derart können vorteilhafter Weise kleinere Messungenauigkeiten oder -fehler ausgeglichen oder entsprechend toleriert werden.

In einer Ausführung der Prüfeinrichtung ist der optische Sensor eine Kamera. Das Preform kann in einem gemeinsamen Raum mit der Kamera und/oder in einem von der Kamera abgeschlossenen Raum, insbesondere einem abgeschlossenen aber einsehbarem Raum, angeordnet sein. Durch eine räumliche Trennung der Preforms und der Kamera wird vorteilhafter Weise eine Beeinflussung insbesondere temperatursensibler Kamerakomponenten verhindert und somit eine Lebensdauer der Kamera erhöht.

Die Kamera ist insbesondere dazu eingerichtet, Bilddaten eines Preforms in einem vordefinierten Erfassungsbereich aufzunehmen. Die Kamera kann dazu eingerichtet sein, Sensordaten aufzunehmen, welche für eine Prüfung einer Vielzahl Prüfkriterien verwendet werden. Die Kamera kann zudem dazu eingerichtet sein, Sensordaten eines ersten Preforms und eines zweiten Preforms zeitgleich aufzunehmen. Eine Kamera liefert vorteilhafter Weise Bilddaten zu mehreren im Erfassungsbereich der Kamera vorliegenden Preforms. Weiter vorteilhaft können die verschiedenen Messpositionen der Preforms durch jeweilige Kameraeinstellungen optimal erfasst werden.

Zusätzlich oder alternativ ist die Kamera insbesondere um eine im Wesentlichen horizontalen erste Kameraachse und/oder eine im Wesentlichen vertikale zweite Kameraachse und/oder eine im Wesentlichen senkrecht zu der ersten Kameraachse und der zweiten Kameraachse orientierten dritten Kameraachse drehbar. Die Kamera kann aktiv drehbar sein und derart vorteilhafter Weise ein anpassbarer Erfassungsbereich realisiert sein.

Die Kamera kann fest und/oder verschieblich an einer Halterung angeordnet sein. Zusätzlich oder alternativ ist eine Beleuchtung an der Kamera und/oder in einer Umgebung der Kamera angeordnet, welche insbesondere einen Erfassungsbereich, welcher sich im Wesentlichen vor der Kamera befindet, ausleuchtet. Schließlich kann ein Schirm oder Hintergrund an der Prüfeinrichtung angeordnet sein, welcher insbesondere als Tiefenbegrenzung des Erfassungsbereiches ausgestaltet ist. Der Schirm stellt mit anderen Worten einen Hintergrund des von der Kamera aufzunehmenden Prüfobjektes dar. Vorteilhafter Weise können mittels des Schirms optimalere Sensordaten für eine Preformprüfung ermittelt werden.

In einer Ausführungsform ist die Kamera eine Farbbildkamera und/oder eine Monochromkamera und/oder eine CCD-Kamera und/oder eine Infrarotkamera. Die Verwendung einer handelsüblichen Kamera führt vorteilhafter Weise zu geringeren Produktionskosten.

Die Prüfeinrichtung kann eine Ausgabeeinheit aufweisen. Die Ausgabeeinheit ist insbesondere über den Datenausgang sensordatenaustauschend mit der Auswerteeinheit der Prüfeinrichtung verbunden. Die Auswerteeinheit sendet insbesondere ein Signal an die Ausgabeeinheit, wobei das Signal insbesondere die Einhaltung des ersten Prüfkriteriums und/oder die Einhaltung des zweiten Prüfkriteriums repräsentiert.

Die Ausgabeeinheit kann zum Ausgeben eines optischen Signals, beispielsweise unter Verwendung eines Leuchtmittels oder eines Bildschirms, zur Ausgabe eines akustischen Signals, beispielsweise mittels eines Lautsprechers, und/oder zur Ausgabe eines haptischen Signals eingerichtet sein. Die Signalausgabe ist bevorzugt derart ausgestaltet, dass ein Werker das Signal wahrnimmt und gegebenenfalls in den Produktionsprozess eingreifen kann. Zusätzlich oder alternativ umfasst die Ausgabeeinheit eine Datenbank und/oder hat Zugriff auf eine Datenbank und ist eingerichtet ein Ergebnis der Prüfung speichertechnisch zu hinterlegen.

In einem weiteren Aspekt wird die Aufgabe gelöst durch eine Streckblasanlage mit einer Heizeinrichtung, einer Streckblasmaschine und einer Prüfeinrichtung zum Prüfen zumindest eines Preforms. Eine Streckblasmaschine kann auch eine Blasmaschine sein. Die Streckblasmaschine ist stromaufwärts nach der Heizeinrichtung angeordnet. Mit anderen Worten weist die Streckblasanlage insbesondere einen Eingabebereich von Preforms in Haltevorrichtungen, einen Einlaufbereich in die Heizeinrichtung, einen Heizbereich in der Heizeinrichtung, einen Auslaufbereich aus der Heizeinrichtung, einen Speicherbereich nach der Heizeinrichtung, einen Einlaufbereich in die Streckblasmaschine, einen Streck- und oder Streckblasbereich und/oder einen Auslaufbereich aus der Streckblasmaschine auf. Die Heizeinrichtung weist im Heizbereich stromaufwärts insbesondre ein erstes Heizelement, ein weiteres Heizelement und/oder ein letztes Heizelement auf. Der Transport der Preforms zum Heizbereich, in dem Heizbereich und/oder nach dem Heizbereich kann mittels Transporteinrichtungen der Streckblasanlage und/oder Transporteinrichtungen der Streckblasmaschine erfolgen, welche vorteilhafter Weise die Positionierung des Preforms an der ersten Position und/oder zweiten Position und/oder dritten Position realisieren. Derart ist eine Komplexitätsreduktion der Prüfeinrichtung und Ausnutzung von Synergien unter geringerem Herstellungsaufwand möglich.

Die Prüfeinrichtung kann als Bestandteil der Heizeinrichtung ausgebildet sein. Dabei ist die Prüfeinrichtung insbesondere in einem Einlaufbereich der Preforms in die Heizeinrichtung, insbesondere vor einem ersten Heizelement der Heizeinrichtung, in dieser angeordnet.

In einer weiteren Ausführungsform ist die Prüfeinrichtung in der Streckblasanlage nach dem Einlaufbereich der Preforms in die Heizeinrichtung, und vor einem Auslaufbereich aus der Heizeinrichtung angeordnet. Der Einlaufbereich ist insbesondere vor einem ersten Heizelement angeordnet und der Auslaufbereich ist insbesondere nach einem letzten Heizelement angeordnet. Mit anderen Worten erfolgt die Prüfung somit zeitgleich zu dem Aufheizen der Preforms und/oder des Transports der Preforms durch den Heizbereich statt. Da die Preforms zum Erreichen einer gleichmäßigen Erwärmung während des Aufheizens einer Rotation unterliegen, kann vorteilhafter Weise die prozessbedingte Bewegung der Preforms zur Realisierung der ersten Position und/oder zweiten Position und/oder dritten Position genutzt werden. Somit ergibt sich ein geringerer Umsetzungsaufwand für die Prüfeinrichtung, da bestehende Maschinenelemente der Streckblasanlage verwendet werden.

In einer weiteren Ausführung weist die Streckblasanlage einen Spiegel auf. Der Spiegel ist insbesondere eingerichtet eine mittelbare Datenaufnahme eines Preform an einer vierten Position, welche außerhalb eines Erfassungsbereiches des optischen Sensors der Prüfeinrichtung liegt, umzusetzen. Mit anderen Worten wird der Erfassungsbereich des optischen Sensors mittels des Spiegels erweitert. Vorteilhafter Weise können derart weitere Positionen, u.a. auch durch Maschinenelemente verdeckten Positionen, von dem optischen Sensor aufgenommen werden. Derart ist eine einfachere Integration der Prüfeinrichtung in eine Blasmaschine und/oder Blasanlage gegeben und es kann vorteilhafter Weise auf weitere Sensoren zur Erschließung des erweiterten Erfassungsbereiches verzichtet werden.

In einem weiteren Aspekt wird die Aufgabe gelöst durch ein Verfahren zum Prüfen eines in eine Halterung einer Prüfeinrichtung in einer Streckblasmaschine eingelegten Preforms. In einem ersten Schritt wird das Preform in einer ersten Orientierung positioniert. In einem zweiten Schritt des Verfahrens werden mittels eines optischen Sensors erste Sensordaten des Preforms ermittelt und an eine Auswerteeinheit übermittelt. In einem dritten Schritt wird das Preform in einer zweiten Orientierung positioniert und in einem vierten Schritt werden mittels des optischen Sensors zweite Sensordaten des Preforms ermittelt und an die Auswerteeinheit übermittelt. In einem fünften Schritt wird mittels der Auswerteeinheit festgestellt, dass die ersten Sensordaten ein erstes Prüfkriterium erfüllen und die zweiten Sensordaten ein zweites Prüfkriterium erfüllen. In einem sechsten Schritt wird mittels der Auswerteeinheit ein Freigabesignal an eine Steuerungseinrichtung der Streckblasmaschine ausgegeben, welches die Feststellung des ersten Prüfkriteriums und des zweiten Prüfkriteriums repräsentiert.

Vorteilhafter Weise wird somit das Preform unter Verwendung von mittels im Wesentlichen eines optischen Sensors aufgenommener Sensordaten geprüft und Preforms, welche den Qualitätsansprüchen nicht genügen, können vorteilhafter Weise vor einem Expandieren ausgeschleust werden.

In einer Ausführungsform wird das Preform zusätzlich in einer dritten Orientierung positioniert, es werden mittels des optischen Sensors dritte Sensordaten des Preforms ermittelt und die dritten Sensordaten an die Auswerteeinheit übermittelt, mittels der Auswerteeinheit festgestellt, dass die dritten Sensordaten ein drittes Prüfkriterium erfüllen und ein zweites Freigabesignal von der Auswerteeinheit an die Steuerungseinrichtung der Streckblasmaschine ausgegeben, wobei das zweite Freigabesignal die Erfüllung des dritten Prüfkriteriums repräsentiert. Vorteilhafter Weise entspricht die erste Orientierung einem Winkelgrad von 0° und die zweite Orientierung einem Winkelgrad von 120° und die dritte Orientierung einem Winkelgrad von 240°, so dass die Mantelfläche des Preforms vollständig geprüft ist.

Die Merkmale des zweiten und dritten Aspektes, Merkmalskombinationen sowie die sich aus diesen ergebende Vorteile entsprechen den in Verbindung mit dem erstgenannten Erfindungsaspekt genannten.

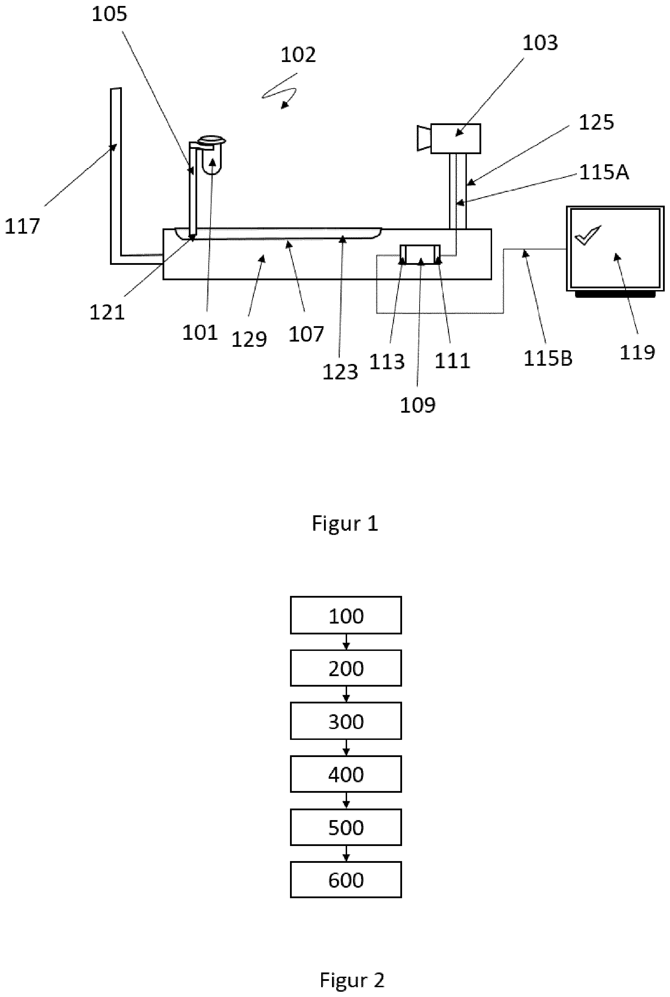

Im Weiteren wird die Erfindung anhand von Ausführungsbeispielen näher erläutert. Es zeigen
- Figur 1: eine schematische Darstellung einer Prüfeinrichtung,
- Figur 2: ein Flussdiagramm eines erfindungsgemäßen Verfahrens zum Prüfen eines in eine Halterung einer Prüfeinrichtung in einer Streckblasmaschine eingelegten Preforms,
- Figur 3: eine Draufsicht einer Streckblasanlage mit integrierter Prüfeinrichtung und
- Figur 4: eine schematische Seitenansicht einer Prüfeinrichtung mit einem Spiegel.

Eine Prüfeinrichtung 102 weist eine Grundplatte 129 auf. An der Grundplatte 129 ist eine Linearführung 107 als Führungseinrichtung angeordnet. An der Linearführung 107 ist eine, entlang eines Führungspfades der Linearführung 107 bewegliche, Halteeinrichtung 105 angeordnet. Die Halteeinrichtung 105 ist dazu eingerichtet, ein Preform 101 mittels einer Klemme zu halten. Der Führungspfad umfasst zumindest eine erste Position 121 mit einer ersten Rotation des Preforms 101 von 60° um die eigene Achse und eine zweite Position 123 mit einer zweiten Rotation des Preforms 101 von 120° um die eigene Achse auf. Weiter ist an der Grundplatte 129 eine Kamera 103 drehbeweglich an einem Stativ 125 angeordnet.

Der Erfassungsbereich der Kamera 103 umfasst zumindest eine erste Aufnahmeposition des mittels Halteeinrichtung 105 gehaltenen Preforms 101 an der ersten Position 121 und eine zweite Aufnahmeposition des mittels Halteeinrichtung 105 gehaltenen Preforms 101 an der zweiten Position 123. Weiter ist an der Grundplatte 129 gegenüberliegend zur Kamera 103 ein Schirm 117 angeordnet.

Das Preform 101 ist während der Sensordatenaufnahme mit anderen Worten zwischen dem Schirm 117 und der Kamera 103 angeordnet. Der Erfassungsbereich der Kamera 103 umfasst zudem zumindest einen Teilbereich des Schirms 117. Der Schirm 117 begrenzt somit eine Tiefe des Erfassungsbereiches der Kamera 103.

Darüber hinaus weist die Prüfeinrichtung 102 einen Rechner 109 mit einem Dateneingang 111 und einem Datenausgang 113 auf. Am Dateneingang 111 ist über ein erstes Datenkabel 115A die Kamera 103 angeschlossen. Die Kamera 103 sendet unter Verwendung des ersten Datenkabels 115A ermittelte Bilddaten über den Dateneingang 111 an den Rechner 109. Am Datenausgang 113 des Rechners 109 ist mit einem zweiten Datenkabel 115B ein Anzeigebildschirm 119 angeschlossen.

Zum Prüfen einer Länge des Preforms 101, als erstes Prüfkriterium, wird das Preform 101 zu einem ersten Zeitpunkt durch Zusammenwirken der Halteeinrichtung 105 und der Linearführung 107 an die erste Position 121 geführt und die Kamera 103 nimmt zu einem zweiten Zeitpunkt erste Sensordaten auf, welche das Preform 101 in einer ersten Orientierung zeigen. Die Kamera 103 sendet die ersten Sensordaten im Ansprechen auf die Aufnahme über den Dateneingang 111 an den Rechner 109.

Zur Prüfung einer Beschaffenheit der Seitenwand des Preforms 101, als zweites Prüfkriterium, wird das Preform 101 zu einem dritten Zeitpunkt durch die Halteeinrichtung 105 in Zusammenwirken mit der Linearführung 107 an die zweite Position 123 geführt und die Kamera 103 nimmt zu einem vierten Zeitpunkt zweite Sensordaten des an der zweiten Position 123 befindlichen Preforms 101 auf. Die Kamera 103 sendet die zweiten Sensordaten im Ansprechen auf die Aufnahme über den Dateneingang 111 an den Rechner 109.

Der Rechner 109 stellt zu einem fünften Zeitpunkt unter Verwendung eines Bildanalyseprogramms die Einhaltung des ersten Prüfkriteriums "Länge" und des zweiten Prüfkriteriums "Beschaffenheit der Seitenwand des Preforms 101" fest. Anschließend übermittelt der Rechner 109 über den Datenausgang 113 und unter Verwendung des zweiten Datenkabels 115B zu einem sechsten Zeitpunkt ein Signal an den Anzeigeschirm 119. Das Signal repräsentiert die festgestellte Einhaltung des ersten Prüfkriteriums "Länge" und des zweiten Prüfkriteriums "Beschaffenheit der Seitenwand des Preforms 101". Im Ansprechen auf den Erhalt des Signals zeigt der Anzeigebildschirm 119 zu einem siebten Zeitpunkt ein speichertechnisch hinterlegtes Icon an, welches eine Freigabe des Preforms 101 repräsentiert.

Bei einem Verfahren zum Prüfen eines in einer Halterung einer Prüfeinrichtung in einer Streckblasmaschine eingelegten Preforms erfolgt das Positionieren 100 des Preforms an einer ersten Position in einer 0-Grad-Orientierung, anschließend werden mittels einer CCD-Kamera erste Sensordaten des Preforms ermittelt 200 und die ersten Sensordaten werden an einen Rechner übermittelt. Danach wird das Preform an einer zweiten Position in einer 180-Grad-Orientierung positioniert 300 und es werden mittels der CCD-Kamera zweite Sensordaten des Preforms ermittelt 400 und es werden die zweiten Sensordaten an den Rechner übermittelt. Unter Verwendung eines Bildauswertealgorithmus stellt der Rechner automatisch fest 500, dass die ersten Sensordaten ein drittes Prüfkriterium "Durchmesser" erfüllen und die zweiten Sensordaten ein viertes Prüfkriterium "Grauwert" erfüllen. Der Rechner gibt im Ansprechen auf die Feststellung ein Freigabesignal an ein Steuergerät der Prüfeinrichtung aus 600, wobei das Freigabesignal die festgestellte Erfüllung des dritten Prüfkriteriums "Länge" und des vierten Prüfkriteriums "Grauwert" repräsentiert.

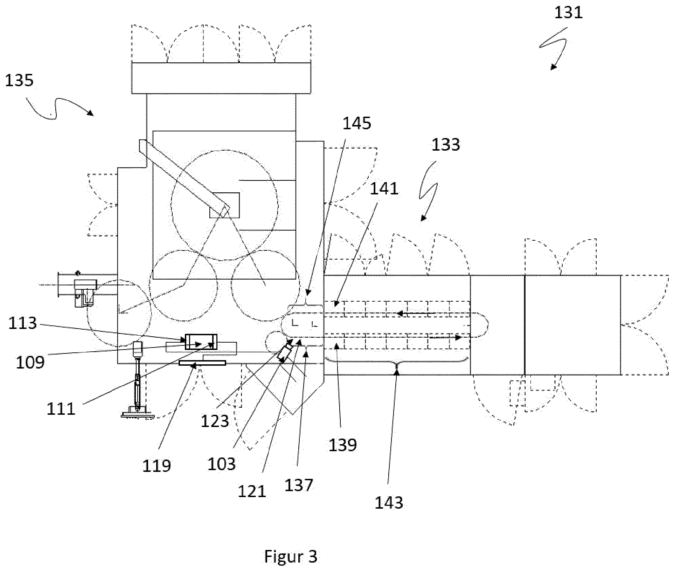

Bei einer in Figur 3 gezeigten Anordnung der Prüfeinrichtung 102 in einer Streckblasanlage 131 mit Heizeinrichtung 133 ist die Prüfeinrichtung 102 als Bestandteil der Heizeinrichtung 133 ausgebildet. Die Heizeinrichtung 133 weist einen Einlaufbereich 137 und stromaufwärts einen Heizbereich 143 und einen Auslaufbereich 145 auf. Der Heizbereich 143 weist ein erstes Heizelement 139 zu Beginn des Heizbereiches 143 auf. Dem ersten Heizelement 139 nachfolgend weist der Heizbereich 143 stromaufwärts sechs weitere Heizelemente und nach einer Richtungsumkehr des Transportes ein achtes bis dreizehntes Heizelement sowie abschließend ein letztes Heizelement 141 auf.

Ein Preform 101 wird am Anfang des Einlaufbereiches 137 in eine Halteeinrichtung 105 angeordnet übernommen und die Halteeinrichtung 105 nachfolgend durch den Heizbereich 143 bis zum Auslaufbereich 145 mittels eines Kettenantriebs transportiert. Die Streckblasanlage 131 weist eine CCD-Kamera 103 auf, welche Sensordaten des im Einlaufbereich befindlichen Preforms 101 aufnimmt und zur Auswertung an den Rechner 109 sendet, welcher ein Signal zu einem Anzeigebildschirm 119 sendet, welches Auswerteergebnisses repräsentiert. Am Ende des Auslaufbereichs 145 wird das nunmehr erwärmte Preform 101 an die Streckblasmaschine 135 übergeben, welche das erwärmte Preform 101 zu einem Behälter ausformt. Alternativ kann die Streckblasmaschine 135 den Heizbereich 143 umfassen.

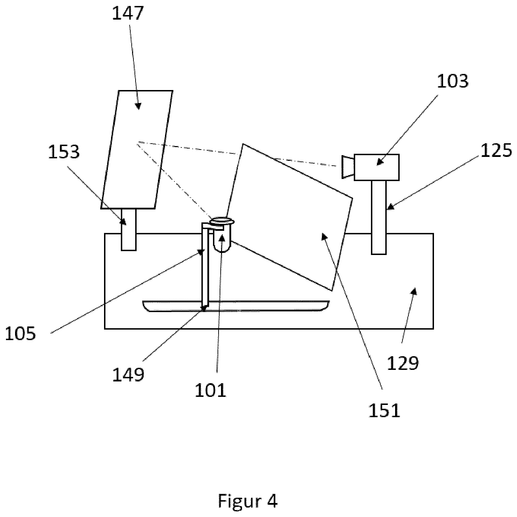

Das zu prüfende Preform 101 liegt in Figur 4 an einer vierten Position 149 außerhalb eines direkten Erfassungsbereiches der Kamera 103, da ein Maschinenbauteil 151 eine direkte Sicht verdeckt. An der Grundplatte 129 ist ein Spiegel 147 derart mittels einer Halterung 153 angeordnet, dass für die Kamera 103 ein Abbild des Preforms 101 über den Siegel 147 sichtbar ist.

### Bezugszeichenliste

101 Preform
102 Prüfeinrichtung
103 Kamera
105 Halteeinrichtung
107 Linearführung
109 Rechner
111 Dateneingang
113 Datenausgang
115A erstes Datenkabel
115B zweites Datenkabel
117 Schirm
119 Anzeigebildschirm
121 erste Position
123 zweite Position
125 Stativ
129 Grundplatte
131 Streckblasanlage
133 Heizeinrichtung
135 Streckblasmaschine
137 Einlaufbereich
139 erstes Heizelement
141 letztes Heizelement
143 Heizbereich
145 Auslaufbereich
147 Spiegel
149 vierte Position
151 Maschinenbauteil
153 Halterung
100 Positionieren des Preforms an einer ersten Position
200 Ermitteln erster Sensordaten
300 Positionieren des Preforms an einer zweiten Position
400 Ermitteln zweiter Sensordaten
500 Feststellen einer Erfüllung eines dritten Prüfkriteriums und eines vierten Prüfkriteriums
600 Ausgeben eines Freigabesignals

## Patentansprüche

1. Prüfeinrichtung (102) zum Prüfen zumindest eines Preforms (101), mit einem optischen Sensor (103), einer Auswerteeinheit (109) mit einem Dateneingang (111) und einem Datenausgang (113), wobei die Auswerteeinheit (109) über den Dateneingang (111) sensordatenaustauschend mit dem optischen Sensor (103) verbunden ist, und mit einer der Prüfeinrichtung (102) zugeordneten Haltevorrichtung (105), welche zum Halten des Preforms (101) ausgestaltet ist und das Preform (101) zu einem ersten Zeitpunkt in einer ersten vordefinierten Orientierung des Preforms (101) an eine erste Position (121) führt und das Preform (101) zu einem zweiten Zeitpunkt in einer zweiten vordefinierten Orientierung des Preforms (101) an eine zweite Position (123) führt, **dadurch gekennzeichnet, dass** die Prüfeinrichtung (102) eingerichtet ist mittels des optischen Sensors (103) zum ersten Zeitpunkt erste Sensordaten des Preforms (101) zu ermitteln und über den Dateneingang (111) an die Auswerteeinheit (103) zu senden und mittels des optischen Sensors (103) zum zweiten Zeitpunkt zweite Sensordaten des Preforms (101) zu ermitteln und über den Dateneingang (111) an die Auswerteeinheit (109) zu senden, wobei die Auswerteeinheit (109) eingerichtet ist anhand der ersten Sensordaten die Einhaltung eines ersten Prüfkriteriums und anhand der zweiten Sensordaten die Einhaltung eines zweiten Prüfkriteriums zu ermitteln.

2. Prüfeinrichtung (102) nach einem der vorstehenden Ansprüche, wobei die zugeordnete Haltevorrichtung (105) an einer Führungseinrichtung (107) und/oder an einer Drehvorrichtung angeordnet ist.

3. Prüfeinrichtung (102) nach einem der vorstehenden Ansprüche, wobei die Haltevorrichtung (105) das Preform (101) zu einem dritten Zeitpunkt in einer dritten vordefinierten Orientierung des Preforms (101) an eine dritte Position führt und die Prüfeinrichtung (102) weiter eingerichtet ist mittels des optischen Sensors (103) zum dritten Zeitpunkt dritte Sensordaten des Preforms (101) zu ermitteln und über den Dateneingang (111) an die Auswerteeinheit (103) zu senden sowie weiter mittels der Auswerteeinheit (103) anhand der dritten Sensordaten die Einhaltung des ersten Prüfkriteriums und/oder das zweite Prüfkriterium und/oder ein drittes Prüfkriterium zu ermitteln.

4. Prüfeinrichtung (102) nach einem der vorstehenden Ansprüche, wobei die zweite vordefinierte Orientierung des Preforms (101) einen zweiten Winkelgrad des Preforms (101) aufweist, welcher um 30° bis 90, insbesondere 40° bis 80, bevorzugt 60°, in einer ersten Rotationsrichtung von einem ersten Winkelgrad der ersten Orientierung des Preform (101) abweicht und/oder die dritte vordefinierte Orientierung des Preforms (101) einen dritten Winkelgrad des Preforms (101) aufweist, welcher um 30° bis 90, insbesondere 40° bis 80, insbesondere 60°, in der ersten Rotationsrichtung von dem zweiten Winkelgrad des Preforms (101) abweicht.

5. Prüfeinrichtung (102) nach einem der vorstehenden Ansprüche, wobei das erste Prüfkriterium und/oder das zweite Prüfkriterium und/oder das dritte Prüfkriterium eine Stützringhöhe und/oder ein Taumelschlag und/oder eine Farbe des Preforms (101) und/oder eine Länge des Preforms (101) und/oder eine Beschaffenheit einer Seitenwand des Preforms (101) ist.

6. Prüfeinrichtung (102) nach einem der vorstehenden Ansprüche, **dadurch gekennzeichnet, dass** der optische Sensor (103) der Prüfeinrichtung (102) als eine bildgebende Kamera, insbesondere eine Farbbildkamera und/oder Monochromkamera und/oder CCD-Kamera und/oder eine Infrarot-Kamera, ausgebildet ist.

7. Prüfeinrichtung (102) nach einem der vorstehenden Ansprüche, wobei das Preform (101) zum ersten Zeitpunkt und/oder zum zweiten Zeitpunkt und/oder zum dritten Zeitpunkt bewegt oder zumindest temporär lagernd ist und/oder noch nicht in einen ersten Heizbereich (143) eingeführt ist und/oder in dem ersten Heizbereich (143) vorliegt und/oder zwischen dem ersten Heizbereich (143) und einem zweiten Heizbereich vorliegt und/oder in dem zweiten Heizbereich vorliegt und/oder aus dem zweiten Heizbereich ausgeführt ist.

8. Prüfeinrichtung (102) nach einem der vorstehenden Ansprüche, wobei die Prüfeinrichtung (102) weiter eine Ausgabeeinheit (119) aufweist und die Auswerteeinheit (109) über den Datenausgang (113) sensordatenaustauschend mit der Ausgabeeinheit (119) verbunden ist, wobei die Auswerteeinheit (109) ein Signal an die Ausgabeeinheit (119) übermittelt, welches die Einhaltung des ersten Prüfkriteriums und/oder die Einhaltung des zweiten Prüfkriteriums und/oder die Einhaltung des dritten Prüfkriteriums repräsentiert.

9. Prüfeinrichtung (102) nach einem der vorstehenden Ansprüche, wobei das Preform (101) Kunststoff, insbesondere thermoplastischen Kunststoff, aufweist.

10. Prüfeinrichtung (102) nach einem der vorstehenden Ansprüche, wobei das Preform (101) insbesondere eine Höhe von 3 cm bis 25cm, insbesondere 3 cm bis 16 cm und eine Wanddicke von 0,1 mm bis 10 mm, insbesondere 0,5 mm bis 5 mm aufweist.

11. Streckblasanlage (131) mit einer Prüfeinrichtung (102) nach einem der Ansprüche 1 - 10, einer Heizeinrichtung (133) für Preforms (101) und einer stromaufwärts angeordneten Streckblasmaschine (135) **dadurch gekennzeichnet, dass** die Prüfeinrichtung (102) als Bestandteil der Heizeinrichtung (133) ausgebildet und insbesondere in einem Einlaufbereich (137) des Preforms (101) vor einem ersten Heizelement (139) der Heizeinrichtung (133) in dieser angeordnet ist.

12. Streckblasanlage (131) nach Anspruch 11, **dadurch gekennzeichnet, dass** die Prüfeinrichtung (102) zwischen dem Einlaufbereich (137) des Preforms (101) in einen Heizbereich (143) und einem, nach einem letzten Heizelement (141) der Heizeinrichtung (133) angeordneten, Auslaufbereich (145) des Preforms (101) angeordnet ist.

13. Streckblasanlage (131) nach Anspruch 11 oder 12, wobei die Streckblasanlage (131) einen Spiegel (147) aufweist und der Spiegel (147) eingerichtet ist, eine mittelbare Datenaufnahme eines Preform (101), welches an einer vierten Position (149) außerhalb eines Erfassungsbereiches des optischen Sensors (103) der Prüfeinrichtung (102) vorliegt, umzusetzen.

14. Verfahren zum Prüfen eines in eine Halterung einer Prüfeinrichtung in einer Streckblasmaschine eingelegten Preforms umfassend die Schritte:
• Positionieren (100) des Preforms in einer ersten Orientierung,
• Ermitteln (200) von ersten Sensordaten des Preforms mittels eines optischen Sensors und übermitteln der ersten Sensordaten an eine Auswerteeinheit,
• Positionieren (300) des Preforms in einer zweiten Orientierung,
• Ermitteln (400) von zweiten Sensordaten mittels des optischen Sensors und übermitteln der zweiten Sensordaten an die Auswerteeinheit,
• Feststellen (500) mittels der Auswerteeinheit, dass die ersten Sensordaten ein erstes Prüfkriterium erfüllen und die zweiten Sensordaten ein zweites Prüfkriterium erfüllen und
• Ausgeben (600) eines Freigabesignals von der Auswerteeinheit an eine Steuerungseinrichtung der Streckblasmaschine, wobei das Freigabesignal die Erfüllung des ersten Prüfkriteriums und die Erfüllung des zweiten Prüfkriteriums repräsentiert.

15. Verfahren nach Anspruch 14, weiter umfassend die Schritte:
• Positionieren (400a) des Preforms in einer dritten Orientierung,
• Ermitteln (400b) von dritten Sensordaten des Preforms mittels des optischen Sensors und übermitteln der dritten Sensordaten an die Auswerteeinheit,
• Feststellen (500b) mittels der Auswerteeinheit, dass die dritten Sensordaten ein drittes Prüfkriterium erfüllen und
• Ausgeben (600b) eines zweiten Freigabesignals von der Auswerteeinheit an die Steuerungseinrichtung der Streckblasmaschine, wobei das zweite Freigabesignal die Erfüllung des dritten Prüfkriteriums repräsentiert.

## Claims

1. Testing device (102) for testing at least one preform (101), having an optical sensor (103), an evaluation unit (109) with a data input (111) and a data output (113), wherein the evaluation unit (109) is connected to the optical sensor (103) via the data input (111) in order to exchange sensor data, and with a holding apparatus (105) assigned to the testing device (102) which is designed to hold the preform (101) and guides the preform (101) to a first position (121) in a first predefined orientation of the preform (101) at a first point in time and guides the preform (101) to a second position (123) in a second predefined orientation of the preform (101) at a second point in time, **characterised in that** the testing device (102) is adapted to detect first sensor data of the preform (101) by means of the optical sensor (103) at the first point in time and send it to the evaluation unit (103) via the data input (111), and to detect second sensor data of the preform (101) by means of the optical sensor (103) at the second point in time and send it to the evaluation unit (109) via the data input (111), wherein the evaluation unit (109) is adapted to detect compliance with a first test criterion on the basis of the first sensor data and compliance with a second test criterion on the basis of the second sensor data.

2. Testing device (102) according to one of the preceding claims, wherein the assigned holding apparatus (105) is arranged on a guiding device (107) and/or on a rotating device.

3. Testing device (102) according to one of the preceding claims, wherein the holding apparatus (105) guides the preform (101) to a third position in a third predefined orientation of the preform (101) at a third point in time, and the testing device (102) is further adapted to detect third sensor data of the preform (101) by means of the optical sensor (103) at the third point in time and send it to the evaluation unit (103) via the data input (111), and furthermore to detect compliance with the first test criterion and/or the second test criterion and/or a third test criterion by means of the evaluation unit (103) on the basis of the third sensor data.

4. Testing device (102) according to one of the preceding claims, wherein the second predefined orientation of the preform (101) has a second angular degree of the preform (101) which deviates by 30° to 90°, in particular 40° to 80°, preferably 60°, in a first rotation direction from a first angular degree of the first orientation of the preform (101) and/or wherein the third predefined orientation of the preform (101) has a third angular degree of the preform (101) which deviates by 30° to 90°, in particular 40° to 80°, in particular 60°, in the first rotation direction from the second angular degree of the preform (101).

5. Testing device (102) according to one of the preceding claims, wherein the first test criterion and/or the second test criterion and/or the third test criterion is a support ring height and/or a wobble and/or a colour of the preform (101) and/or a length of the preform (101) and/or a composition of a side wall of the preform (101).

6. Testing device (102) according to one of the preceding claims, **characterised in that** the optical sensor (103) of the testing device (102) is configured as an imaging camera, in particular a colour imaging camera and/or monochrome camera and/or CCD camera and/or an infrared camera.

7. Testing device (102) according to one of the preceding claims, wherein the preform (101) is moved or at least temporarily stationary at the first point in time and/or at the second point in time and/or at the third point in time and/or is not yet introduced into a first heating area (143) and/or is present in the first heating area (143) and/or is present between the first heating area (143) and a second heating area and/or is present in the second heating area and/or is led out of the second heating area.

8. Testing device (102) according to one of the preceding claims, wherein the testing device (102) further comprises an output unit (119) and the evaluation unit (109) is connected to the output unit (119) via the data output (113) in order to exchange sensor data, wherein the evaluation unit (109) transmits a signal to the output unit (119) which represents compliance with the first test criterion and/or compliance with the second test criterion and/or compliance with the third test criterion.

9. Testing device (102) according to one of the preceding claims, wherein the preform (101) is made of plastic, in particular thermoplastic resin.

10. Testing device (102) according to one of the preceding claims, wherein the preform (101) in particular has a height of 3 cm to 25 cm, in particular 3 cm to 16 cm, and a wall thickness of 0.1 mm to 10 mm, in particular 0.5 mm to 5 mm.

11. Stretch blow moulding system (131) with a testing device (102) according to any of claims 1-10, a heating device (133) for preforms (101) and a stretch blow moulding machine (135) arranged upstream thereof, **characterised in that** the testing device (102) is configured as a component of the heating device (133) and, in particular, is arranged within the latter in an entry area (137) of the preform (101) before a first heating element (139) of the heating device (133).

12. Stretch blow moulding system (131) according to claim 11, **characterised in that** the testing device (102) is arranged between the entry area (137) of the preform (101) into a heating area (143) and an exit area (145) of the preform (101) arranged after a last heating element (141) of the heating device (133).

13. Stretch blow moulding system (131) according to claim 11 or 12, wherein the stretch blow-moulding system (131) has a mirror (147) and the mirror (147) is adapted to realise an indirect data capture of a preform (101) which is present at a fourth position (149) outside a detection range of the optical sensor (103) of the testing device (102).

14. Method for testing a preform inserted into a holder of a testing device in a stretch blow moulding machine, comprising the following steps:
• positioning (100) the preform in a first orientation.
• detecting (200) first sensor data of the preform by means of an optical sensor and transmitting the first sensor data to an evaluation unit.
• positioning (300) the preform in a second orientation.
• detecting (400) second sensor data by means of the optical sensor and transmitting the second sensor data to the evaluation unit.
• determining (500) by means of the evaluation unit that the first sensor data fulfils a first test criterion and the second sensor data fulfils a second test criterion, and
• outputting (600) a release signal from the evaluation unit to a control device of the stretch blow moulding machine, wherein the release signal represents the fulfilment of the first test criterion and the fulfilment of the second test criterion.

15. Method according to claim 14, further comprising the following steps:
• positioning (400a) the preform in a third orientation.
• detecting (400b) third sensor data of the preform by means of the optical sensor and transmitting the third sensor data to the evaluation unit.
• determining (500b) by means of the evaluation unit that the third sensor data fulfils a third test criterion, and
• outputting (600b) a second release signal from the evaluation unit to the control device of the stretch blow moulding machine, wherein the second release signal represents the fulfilment of the third test criterion.

## Revendications

1. Système de contrôle (102) pour contrôler au moins une préforme (101), avec un capteur optique (103), une unité d'évaluation (109) avec une entrée de données (111) et une sortie de données (113), dans lequel l'unité d'évaluation (109) est reliée au capteur optique (103) par l'intermédiaire de l'entrée de données (111) avec échange de données de capteur, et avec un dispositif de maintien (105) associé au système de contrôle (102), qui est conçu pour maintenir la préforme (101) et amène la préforme (101) à un premier moment dans une première orientation prédéfinie de la préforme (101) en une première position (121) et amène la préforme (101) à un deuxième moment dans une deuxième orientation prédéfinie de la préforme (101) en une seconde position (123), **caractérisé en ce que** le système de contrôle (102) est configuré pour déterminer au moyen du capteur optique (103) au premier moment des premières données de capteur de la préforme (101) et pour les envoyer via l'entrée de données (111) à l'unité d'évaluation (103) et pour déterminer au moyen du capteur optique (103) au deuxième moment des deuxièmes données de capteur de la préforme (101) et pour les envoyer à l'unité d'évaluation (109) via l'entrée de données (111), dans lequel l'unité d'évaluation (109) est configurée pour déterminer le respect d'un premier critère de contrôle à l'aide des premières données de capteur et le respect d'un deuxième critère de contrôle à l'aide des deuxièmes données de capteur.

2. Système de contrôle (102) selon l'une quelconque des revendications précédentes, dans lequel le dispositif de maintien (105) associé est disposé sur un système de guidage (107) et/ou sur un dispositif de rotation.

3. Système de contrôle (102) selon l'une quelconque des revendications précédentes, dans lequel le dispositif de maintien (105) amène la préforme (101) à un troisième moment en une troisième orientation prédéfinie de la préforme (101) dans une troisième position et le système de contrôle (102) est en outre configuré pour déterminer au moyen du capteur optique (103) au troisième moment des troisièmes données de capteur de la préforme (101) et pour les envoyer à l'unité d'évaluation (103) via l'entrée de données (111) et en outre pour déterminer au moyen de l'unité d'évaluation (103), à l'aide des troisièmes données de capteur, le respect du premier critère de contrôle et/ou du deuxième critère de contrôle et/ou d'un troisième critère de contrôle.

4. Système de contrôle (102) selon l'une quelconque des revendications précédentes, dans lequel la deuxième orientation prédéfinie de la préforme (101) présente un deuxième degré angulaire de la préforme (101) qui s'écarte de 30° à 90, en particulier de 40° à 80, de préférence de 60°, dans un premier sens de rotation d'un premier degré angulaire de la première orientation de la préforme (101) et/ou la troisième orientation prédéfinie de la préforme (101) présente un troisième degré angulaire de la préforme (101) qui s'écarte de 30° à 90, en particulier 40° à 80, en particulier 60°, dans le premier sens de rotation du deuxième degré angulaire de la préforme (101).

5. Système de contrôle (102) selon l'une quelconque des revendications précédentes, dans lequel le premier critère de contrôle et/ou le deuxième critère de contrôle et/ou le troisième critère de contrôle est une hauteur de bague d'appui et/ou un battement axial et/ou une couleur de la préforme (101) et/ou une longueur de la préforme (101) et/ou une caractéristique d'une paroi latérale de la préforme (101).

6. Système de contrôle (102) selon l'une quelconque des revendications précédentes, **caractérisé en ce que** le capteur optique (103) du système de contrôle (102) est réalisé comme une caméra d'imagerie, en particulier une caméra couleur et/ou caméra monochrome et/ou caméra CCD et/ou une caméra infrarouge.

7. Système de contrôle (102) selon l'une quelconque des revendications précédentes, dans lequel la préforme (101) est déplacée au premier moment et/ou au deuxième moment et/ou au troisième moment ou au moins temporairement en stockage et/ou n'est pas encore introduite dans une première zone de chauffage (143) et/ou est présente dans la première zone de chauffage (143) et/ou est présente entre la première zone de chauffage (143) et une deuxième zone de chauffage et/ou est présente dans la deuxième zone de chauffage et/ou est conçue à partir de la deuxième zone de chauffage.

8. Système de contrôle (102) selon l'une quelconque des revendications précédentes, dans lequel le système de contrôle (102) présente en outre une unité de délivrance (119) et l'unité d'évaluation (109) est reliée à l'unité de délivrance (119) par l'intermédiaire de la sortie de données (113) avec échange de données de capteur, dans lequel l'unité d'évaluation (109) transmet un signal à l'unité de délivrance (119) qui représente le respect du premier critère de contrôle et/ou le respect du deuxième critère de contrôle et/ou le respect du troisième critère de contrôle.

9. Système de contrôle (102) selon l'une quelconque des revendications précédentes, dans lequel la préforme (101) présente du plastique, en particulier du plastique thermoplastique.

10. Système de contrôle (102) selon l'une quelconque des revendications précédentes, dans lequel la préforme (101) présente notamment une hauteur de 3 cm à 25 cm, en particulier de 3 cm à 16 cm et une épaisseur de paroi de 0,1 mm à 10 mm, en particulier de 0,5 mm à 5 mm.

11. Installation d'étirage-soufflage (131) avec un système de contrôle (102) selon l'une quelconque des revendications 1-10, un système de chauffage (133) pour des préformes (101) et une machine d'étirage-soufflage (135) disposée en amont, **caractérisée en ce que** le système de contrôle (102) est réalisé en tant que partie intégrante du système de chauffage (133) et est notamment disposé dans une zone d'entrée (137) de la préforme (101) devant un premier élément chauffant (139) du système de chauffage (133) dans celui-ci.

12. Installation d'étirage-soufflage (131) selon la revendication 11, **caractérisée en ce que** le système de contrôle (102) est disposé entre la zone d'entrée (137) de la préforme (101) dans une zone de chauffage (143) et une zone de sortie (145) de la préforme (101) disposée après un dernier élément chauffant (141) du système de chauffage (133).

13. Installation d'étirage-soufflage (131) selon la revendication 11 ou 12, dans laquelle l'installation d'étirage-soufflage (131) présente un miroir (147) et le miroir (147) est configuré pour mettre en oeuvre un enregistrement de données indirect d'une préforme (101) qui est présent en une quatrième position (149) en dehors d'une zone de détection du capteur optique (103) du système de contrôle (102).

14. Procédé de contrôle d'une préforme placée dans un support d'un système de contrôle dans une machine d'étirage-soufflage comprenant les étapes de :
• positionnement (100) de la préforme dans une première orientation,
• détermination (200) de premières données de capteur de la préforme au moyen d'un capteur optique et transmission des premières données de capteur à une unité d'évaluation,
• positionnement (300) de la préforme dans une deuxième orientation,
• détermination (400) de deuxièmes données de capteur au moyen du capteur optique et transmission des deuxièmes données de capteur à l'unité d'évaluation,
• constatation (500) au moyen de l'unité d'évaluation que les premières données de capteur satisfont à un premier critère de contrôle et que les deuxièmes données de capteur satisfont à un deuxième critère de contrôle et
• délivrance (600) d'un signal de libération de l'unité d'évaluation à un système de commande de la machine d'étirage-soufflage, dans lequel le signal de libération représente la satisfaction du premier critère de contrôle et la satisfaction du deuxième critère de contrôle.

15. Procédé selon la revendication 14, comprenant en outre les étape de :
• positionnement (400a) de la préforme dans une troisième orientation,
• détermination (400b) de troisièmes données de capteur de la préforme au moyen du capteur optique et transmission des troisièmes données de capteur à l'unité d'évaluation,
• constatation (500b) au moyen de l'unité d'évaluation que les troisièmes données de capteur satisfont à un troisième critère de contrôle et
• délivrance (600b) d'un second signal de libération de l'unité d'évaluation au système de commande de la machine d'étirage-soufflage, dans lequel le second signal de libération représente la satisfaction du troisième critère de contrôle.
